# EUROPEAN PATENT APPLICATION

(11) **EP 4 776 475 A1**
(43) Date of publication of application: **15.07.2026**
(21) Application number: 24863108.7
(22) Date of filing: 27.08.2024
(51) Int. Cl.: H02J 50/30, H02J 7/35, H02J 50/90, H05B 47/105, F21Y 113/10, F21Y 115/10

(54) **WIRELESS CHARGING DEVICE AND WIRELESS CHARGING SYSTEM**

(30) Priority: 07.09.2023 KR 20230118735
(71) Applicant: Dongguk University Industry-Academic Cooperation Foundation, Seoul 04620 (KR)
(72) Inventor: LEE, Jae Joon, Seoul 03130 (KR); YOO, Kicheon, Hwaseong-si, Gyeonggi-do 18488 (KR); KANG, Hyeong Cheol, Busan 48107 (KR)
(74) Representative: Franke, Dirk
(86) International application number: PCT/KR2024/012808
(87) International publication number: WO 2025/053527

(57) **Abstract**

The present invention relates to a wireless charging device and, more specifically, to a charging device for charging a device including an optical charging unit for charging a power supply unit by using electricity generated by photovoltaic power generation by absorbing light, the wireless charging device including: a plurality of light sources for emitting light toward an upper portion; a plurality of sensors for sensing a position where the device is placed; and a control unit which may determine the position where the device is placed through the sensing of the sensors and selectively turn on a light source located in a lower portion of the device. The present invention is advantageous in that after a plurality of light sources are arranged, the light sources are selectively turned on only at a position where a device to be charged is placed, and thus there is no requirement for the device to be accurately arranged at a specific position for charging, thereby improving user convenience and improving space utilization of a desk or a table on which the wireless charging device is installed.

## Description

### Technical Field

The present disclosure relates to a wireless charging device and a wireless charging system and, more particularly, to a wireless charging device and a wireless charging system that perform wireless charging through photovoltaic power generation.

### Background Art

Recently, the use of smart devices such as smartphones and tablets has increased, and the use of wearable smart devices such as smart watches has likewise been on the rise. Most of these smart devices are provided with a power supply unit within the device itself for supplying power to the device, and such a power supply unit generally employs a rechargeable secondary battery.

With the development of secondary battery technology, the amount of charge has increased significantly compared to the size of the secondary battery, but the cycle of charging smart devices is getting even shorter because the size of smart devices is decreasing as well as the usage amount of electricity is increasing as the usage range of such devices continues to expand.

A method of charging the power supply unit of such smart devices is wired charging, which has traditionally been performed by connecting a charging cable. However, as the cycle of charging the smart device is shortened, the inconvenience of wired charging has further increased, and accordingly, demand for wireless charging that does not require connection of a charging cable has been increasing.

For wireless charging, a device to be charged should be provided with a wireless charging function, such as including a wireless power receiving module, and a charging device is required which is provided with a wireless power transmitting module for supplying power to the device's wireless power receiving module. Such wireless charging is classified into a magnetic induction method and a magnetic resonance method, may be classified into a PMA method and a Qi method depending on the method of sensing an approach of the wireless power receiving module with respect to the wireless power transmitting module, and a variety of methods are still in use although efforts have been made to standardize wireless charging methods. In this case, when the method of the wireless power receiving module of the device does not match the method of the wireless power transmitting module of the charging device, there is a problem in that the wireless charging is not performed. Although a charging device capable of simultaneously applying various wireless charging methods has been developed, there is a disadvantage in that the cost of the device increases.

In addition, current wireless charging methods present a problem in that heat is generated in a device and a charging device, so technologies for heat dissipation are being developed. (Korean Patent No. 10-1629653)

Furthermore, when the device is not accurately positioned at a specific location on a charging device, there is a problem that charging is not performed or charging efficiency becomes extremely low, so technologies for adjusting the position of the device have been developed. (Korean Patent No. 10-1489743)

### Disclosure

### Technical Problem

The present disclosure has been devised to solve the problems of the prior art described above and aims to provide a new type of a wireless charging device and a wireless charging system.

### Technical Solution

A wireless charging device according to the present disclosure for achieving the above objective is a charging device for charging a device that includes a light-charging unit configured to absorb light and charge a power supply unit by using electricity generated through photovoltaic power generation, and includes a plurality of light sources configured to radiate light toward an upper portion, a plurality of sensors configured to detect a position at which the device is placed, and a controller configured to determine the position, at which the device is placed, through sensing of the sensor and to selectively turn on a light source positioned at a lower portion of the device.

The sensor may be at least one selected from the group consisting of a light sensor, a motion sensor, and a pressure sensor for detecting an object.

The sensor may detect an NFC or RFID installed in the device.

The light source may be at least one selected from the group consisting of an LED lamp, an RGB (Red, Green, Blue) lamp, and a fluorescent lamp.

A wireless charging system according to another aspect of the present disclosure includes a device connection apparatus comprising a photovoltaic unit configured to absorb light and generate electricity through photovoltaic power generation, and a device connection unit configured to transmit the electricity generated by the photovoltaic unit to a device, and a wireless charging device that includes a plurality of light sources configured to radiate light toward an upper portion, a plurality of sensors configured to detect a position at which the device is placed, and a controller configured to determine the position, at which the device is placed, through sensing of the sensor and to selectively turn on a light source positioned at a lower portion of the device.

The controller may be configured to control the light source not to be turned on when the device is not connected to the device connection unit.

The sensor may be at least one selected from the group consisting of a light sensor, a motion sensor, and a pressure sensor for detecting an object.

The sensor may detect an NFC or RFID installed in the device or the device connection apparatus.

The light source may be at least one selected from the group consisting of an LED lamp, an RGB (Red, Green, Blue) lamp, and a fluorescent lamp.

The photovoltaic unit may be at least one selected from a silicon solar cell, a thin-film type solar cell, an organic solar cell, an organic/inorganic hybrid solar cell, a perovskite solar cell, and a dye-sensitized solar cell.

The photovoltaic unit may include a photoelectrode formed on a conductive substrate or a flexible substrate and including a porous film of metal-oxide nanoparticles on which a photosensitive dye is adsorbed, a counter electrode spaced apart from and to face the photoelectrode, formed on the conductive substrate or the flexible substrate, and including a nanoparticle metal film layer, and a liquid electrolyte composition filled between the photoelectrode and the counter electrode.

### Advantageous Effects

The present disclosure configured as described above has the effects of improving user's convenience because it is not forced to accurately place a device at a specific position for charging, by arranging a plurality of light sources and selectively turning on only the light source at the position where the device to be charged is placed, and at the same time improving the space utilization of a desk or table on which a wireless charging device is installed.

### Description of Drawings

FIG. 1 is a view illustrating a structure of a wireless charging device according to a first exemplary embodiment of the present disclosure.
FIG. 2 is a view illustrating an operation of a wireless charging device according to a first exemplary embodiment of the present disclosure.
FIG. 3 is a view illustrating a structure of a wireless charging system according to a second exemplary embodiment of the present disclosure.
FIG. 4 is a view illustrating an operation of a wireless charging system according to a second exemplary embodiment of the present disclosure.

### Mode for Invention

An exemplary embodiment according to the present disclosure will be described in detail with reference to the accompanying drawings.

However, exemplary embodiments of the present disclosure may be modified in various other forms, and the scope of the present disclosure may not be limited to the exemplary embodiments described below. The shapes and sizes of the elements in the drawing may be exaggerated for clearer explanation, and the elements indicated by the same reference numerals in the drawing may be the same elements.

Also, throughout the specification, when a part is described as being "connected" to another part, this may include not only cases in which it is "directly connected" but also cases in which it is "electrically connected" with another element interposed therebetween. In addition, when a part is described as "including" or "having" a certain component, this may not mean that it excludes other components, but rather that it can include or have other components, unless otherwise specifically stated.

In addition, terms such as "first" and "second" may be intended to distinguish one component from another component, and should not be construed as limiting the scope of the rights. For example, a first component may be referred to as a second component, and similarly, the second component may also be referred to as the first component.

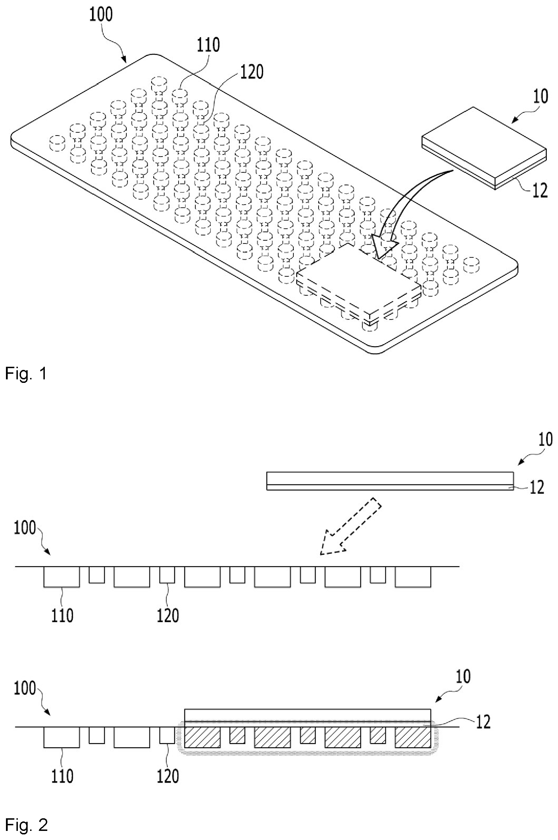

FIG. 1 is a view illustrating a structure of a wireless charging device according to a first exemplary embodiment of the present disclosure, and FIG. 2 is a view illustrating an operation of a wireless charging device according to a first exemplary embodiment of the present disclosure.

The wireless charging device 100 according to the present exemplary embodiment may be composed of a plurality of light sources 110, a sensor 120, and a controller (not shown).

The light source 110 may be configured to radiate light onto a light-charging unit 12 formed in a device 10 to charge a power supply unit of the device 10.

The light-charging unit 12 of the device 10 may be configured to receive light, generate electricity, and use this to charge the power supply unit, and various photovoltaic technologies and electric charging technologies can be used, and in particular, a dye-sensitized solar cell (DSSC) can be applied. The dye-sensitized solar cell was developed by Professor Gratzel of Switzerland by applying the principle of photosynthesis of plants, and may be a photoelectric conversion cell composed of semiconductor nanoparticles having titanium dioxide (TiO₂) as a main component, a dye for absorbing sunlight, an electrolyte, and a platinum counter electrode. Dye-sensitized solar cells may have a relatively simple structure compared to other solar cells, and exhibit about half the energy efficiency of a silicon solar cell, but may be economical because their manufacturing cost is as low as one-fifth that of other photovoltaic cells. The device 10, including the dye-sensitized solar cell in the light-charging unit 12, may continuously perform photovoltaic power generation and charge the power supply unit in an environment where sunlight or indoor lighting is present, but there is a disadvantage in that the efficiency is low and charging is not performed at night.

The wireless charging device 100 of the present exemplary embodiment may generate a larger amount of electricity than when the dye-sensitized solar cell generates power using sunlight or indoor lighting, by radiating light from the light source 110 onto the light-charging unit 12 of the device 10, such that charging is performed more quickly and charging in the light-charging unit 12 of the device 10 can be performed even at night or in dark indoor environments.

Various types of light sources 110 may be applied that are capable of radiating light for performing charging through the light-charging unit 12 of the device 10, and a type may be applied that radiates light in a wavelength range providing high power-generation efficiency in the light-charging unit 12. In this case, the light source 110 capable of controlling lighting may be applied, and may be configured that selective lighting among the plurality of light sources 110 is possible.

The light source 110 of the present exemplary embodiment may be at least one selected from the group consisting of an LED lamp, an RGB (Red, Green, Blue) lamp, and a fluorescent lamp. The color temperature of the light source 110 may be 2500K to 9000K, preferably 3000K to 7600K, and specifically, about 3200K, about 5000K, about 5500K, or about 7600K may be used.

The sensor 120 may be a sensor for detecting an approach and position of the device 10.

Various types of sensors, such as a light sensor, a motion sensor, and a pressure sensor, which are used to detect whether an object is approaching, may be applied as the sensor 120, and different types of sensors may also be used together. The light sensor may use darkening when the device 10 approaches and covers the sensor, the motion sensor may detect the device 10 approaching by sensing a movement, and the pressure sensor may detect that pressure is applied to the sensor by the weight of the device 10 placed on the sensor.

Moreover, the approach of the device 10 may be detected in response to various devices installed in the device 10. For example, the approach of the device 10 may be detected by providing a sensor corresponding to a near field communication (NFC) and RFID (Radio Frequency Identification), which are widely used in recent smart devices.

The controller may determine whether the device 10 is in proximity and a position where the device 10 is placed by using information obtained from the sensor 120, and may control to turn on the light source 110 located at the lower portion where the device 10 is placed.

As illustrated in FIG. 2, when the device 10 is not placed in the wireless charging device 100, the sensors 120 may not respond and all light sources 110 may be turned off.

When the device 10 is placed on the surface of the wireless charging device 100, sensors 120 located at the position where the device 10 is placed may detect the device 10. The controller may determine the position, where the device 10 is placed, on the basis of the positions of the activated sensors 120, and may selectively turn on the light sources 110 located at the lower portion of the device 10.

Through such operations, only the light source 110 located at the lower portion of the device 10 may be turned on regardless of the position where the device 10 is placed, so the wireless charging device 100 can be configured by arranging the light source 110 and the sensor 120 in a wide range and, for example, the wireless charging device 100 can be placed on the surface of furniture such as desks or tables or on the upper surface of a low-height shelf.

When the wireless charging device 100 of the present exemplary embodiment is disposed on a wide surface such as a desk or a table, light charging may be performed at any location where the light sources 110 are arranged. Accordingly, a user can place the device 10 at any position without having to precisely position the device 10 at a specific position for charging the device 10, thereby improving a user's convenience as well as enhancing the spatial utilization of the desk or table.

In addition, since the number of light sources that are turned on varies depending on the size of the device 10, there is an advantage in that a larger device can perform charging more quickly.

Furthermore, since only the light sources located in the area covered by the device 10 are turned on, energy waste can be reduced, and it is possible to prevent problems such as disturbance of a user's sleep caused by light sources being turned on at positions where no device 10 is present.

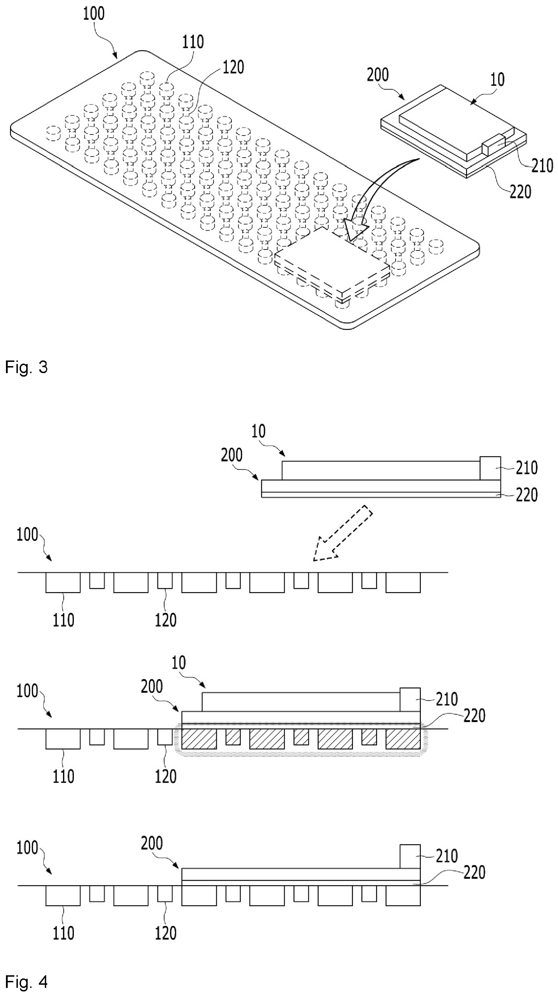

FIG. 3 is a view illustrating a structure of a wireless charging system according to a second exemplary embodiment of the present disclosure, and FIG. 4 is a view illustrating an operation of a wireless charging system according to a second exemplary embodiment of the present disclosure.

The wireless charging system according to the present exemplary embodiment may be composed of a wireless charging device 100 and a device connection apparatus 200.

The wireless charging device 100 may be composed of a plurality of light sources 110, a sensor 120, and a controller (not shown), and the technical matter used in the first exemplary embodiment may be applied as it is, and thus a detailed description thereof will be omitted.

The device connection apparatus 200 may be configured to provide light charging to a device that does not include a light-charging unit for performing light charging, and may include a photovoltaic unit 220 and a device connection unit 210.

The photovoltaic unit 220 may be a component configured to receive light and generate electricity, and various photovoltaic technologies may be used without limitation, and specifically, at least one selected from the group of photoelectric conversion cells consisting of a silicon solar cell, a thin-film solar cell, an organic solar cell, an inorganic-organic hybrid solar cell, a perovskite solar cell, and a dye-sensitized solar cell may be applied.

Among these, the dye-sensitized solar cell (DSSC) may be a photoelectric conversion cell composed of semiconductor nanoparticles having titanium dioxide (TiO₂) as a main component, a dye for absorbing sunlight, an electrolyte, and a platinum counter electrode.

When the photovoltaic unit 220 is based on a dye-sensitized solar cell, it may include a photoelectrode formed on a conductive substrate or a flexible substrate and including a porous film of metal-oxide nanoparticles on which a photosensitive dye is adsorbed, a counter electrode spaced apart from and to face the photoelectrode, formed on the conductive substrate or the flexible substrate, and including a nanoparticle metal film layer, and a liquid electrolyte composition filled between the photoelectrode and the counter electrode. Besides, technologies used in a dye-sensitized solar cell may be applied without limitation in a range that does not impair the characteristics of the present disclosure.

In addition, technologies related to silicon solar cells, thin-film solar cells, organic solar cells, organic/inorganic hybrid solar cells, and perovskite solar cells may be applied without limitation in a range that does not impair the characteristics of the present disclosure.

The device connection unit 210 may be connected to a charging port of the device 10, and may transmit electricity generated by the photovoltaic unit 220 to the charging unit of the device 10, thereby charging the power supply unit of the device 10.

By separately providing such a device connection apparatus 200, light charging may be performed by using the wireless charging system of the present exemplary embodiment even when the device that does not include the light-charging unit for performing light charging is used.

The device connection apparatus 200 may be provided with a near field communication (NFC) or radio frequency identification (RFID), which are widely used in smart devices and, by installing sensors corresponding thereto, the wireless charging device 100 may be configured to detect the approach and position of the device connection apparatus 200.

As illustrated in FIG. 4, an operation of the wireless charging system of the present exemplary embodiment may be substantially the same as that of the first exemplary embodiment described above with reference to FIG. 2.

However, as illustrated in the third, when the device is not connected to the device connection unit 210, it is preferable to control the light source 110 not to be turned on even when the device connection apparatus 200 is placed on the surface of the wireless charging device 100.

The present disclosure has been described above through preferred exemplary embodiments, but the above-described exemplary embodiments may be merely illustrative of the technical idea of the present disclosure, and it will be understood by those of ordinary skill in the art that various changes are possible without departing from the technical idea of the present disclosure. Therefore, the scope of protection of the present disclosure should be interpreted by the matters described in the claims, not by specific exemplary embodiments, and all technical ideas within the equivalent scope should be interpreted as being included in the scope of the present disclosure.

## Claims

1. A wireless charging device for charging a device that includes a light-charging unit configured to absorb light and charge a power supply unit by using electricity generated through photovoltaic power generation, the wireless charging device comprising:
a plurality of light sources configured to radiate light toward an upper portion;
a plurality of sensors configured to detect a position at which the device is placed; and
a controller configured to determine the position, at which the device is placed, through sensing of the sensor and to selectively turn on a light source positioned at a lower portion of the device.

2. The wireless charging device of claim 1, wherein the sensor is at least one selected from the group consisting of a light sensor, a motion sensor, and a pressure sensor for detecting an object.

3. The wireless charging device of claim 1, wherein the sensor detects an NFC or RFID installed in the device.

4. The wireless charging device of claim 1, wherein the light source is at least one selected from the group consisting of an LED lamp, an RGB (Red, Green, Blue) lamp, and a fluorescent lamp.

5. A wireless charging system, the system comprising:
a device connection apparatus comprising a photovoltaic unit configured to absorb light and generate electricity through photovoltaic power generation, and a device connection unit configured to transmit the electricity generated by the photovoltaic unit to a device; and
a wireless charging device comprising a plurality of light sources configured to radiate light toward an upper portion, a plurality of sensors configured to detect a position at which the device is placed, and a controller configured to determine the position, at which the device is placed, through sensing of the sensor and to selectively turn on a light source positioned at a lower portion of the device.

6. The system of claim 5, wherein the controller is configured to control the light source not to be turned on when the device is not connected to the device connection unit.

7. The system of claim 5, wherein the sensor is at least one selected from the group consisting of a light sensor, a motion sensor, and a pressure sensor for detecting an object.

8. The system of claim 5, wherein the sensor detects an NFC or RFID installed in the device or the device connection apparatus.

9. The system of claim 5, wherein the light source is at least one selected from the group consisting of an LED lamp, an RGB (Red, Green, Blue) lamp, and a fluorescent lamp.

10. The system of claim 5, wherein the photovoltaic unit is at least one selected from a silicon solar cell, a thin-film solar cell, an organic solar cell, an organic-inorganic hybrid solar cell, a perovskite solar cell, and a dye-sensitized solar cell.

11. The system of claim 5, wherein the photovoltaic unit comprises:
a photoelectrode formed on a conductive substrate or a flexible substrate and including a porous film of metal-oxide nanoparticles on which a photosensitive dye is adsorbed;
a counter electrode spaced apart from and to face the photoelectrode, formed on the conductive substrate or the flexible substrate, and including a nanoparticle metal film layer; and
a liquid electrolyte composition filled between the photoelectrode and the counter electrode.
